# EUROPEAN PATENT SPECIFICATION

(11) **EP 1 884 002 B1**
(45) Date of publication and mention of the grant of the patent: **04.12.2013**
(21) Application number: 06756278.5
(22) Date of filing: 08.05.2006
(51) Int. Cl.: H02B 1/32

(54) **EXPANDABLE SHELF ASSEMBLY FOR AN ELECTRICAL CABINET**
EXPANDIERBARES REGAL FÜR EINEN SCHALTSCHRANK
ASSEMBLAGE D' ETAGERE EXTENSIBLE POUR UNE ARMOIRE ELECTRIQUE

(30) Priority: 17.05.2005 IT MI20050897
(43) Date of publication of application: 06.02.2008
(73) Proprietor: Bticino S.p.A., 21100 Varese (IT)
(72) Inventor: FABRIZI, Fabrizio, I-24100 Bergamo (IT); RE, Marcello, I-21040 Venegono Superiore (IT); PASSERA, Costantino, I-20094 Corsico (IT); MAGGI, Christian, I-21020 Buguggiate (IT)
(74) Representative: Mozzi, Matteo
(86) International application number: PCT/IT2006/000323
(87) International publication number: WO 2006/123384

(56) References cited:
- EP-A- 0 858 254
- US-A- 3 640 399
- US-A- 6 017 104
- US-A1- 2004 080 244

## Description

The present invention relates to a expandable shelf assembly of a cabinet for electrical devices.

A cabinet for electrical devices is known to house a plurality of these devices in a suitable room such as to form what is technically called an electric switchboard.

These electrical devices being housed within the room are usually attached to a bottom wall of the cabinet or inner support structures. As is known by those skilled in the art, the arrangement of these electrical devices inside the room is established according to installation requirements and further depends on the size of the individual devices. For example, for boards for industrial use, comprising large-sized devices, the devices are vertically housed such as to be stacked on each other. Furthermore, these devices are separated from each other by a safety distance that is directly indicated to the user by the manufacturer of the devices.

To ensure this separation, the room in the cabinet is usually divided by means of partition walls. For example, a known partition wall comprises a plate, preferably fabricated of metallic material, having a rectangular shape and capable of being inserted within the cabinet.

It should be observed that, in order to be inserted within the cabinet, the plate is bent (either upwards or downwards) such as to easily pass through a front access opening of the cabinet. When the plate is within the room, it is released to return to its original shape and extend between opposite side walls of the cabinet. Subsequently, the plate is fixed to said side walls by means of screws. In fact, the plate is provided, for example, with drilled tabs for fixing to the cabinet walls.

Conventional metallic plates for cabinets have a drawback in that, when they are inserted within the room, they can maintain a bent position (either upwards or downwards). Therefore, when the thus deformed plates are fixed to the cabinet side walls may apply a pressure against said walls thereby causing the loosening, unfastening or breakage of the fixing screws. In addition, these bent plates may deform the side walls of the cabinet. Furthermore, based on the types of electrical devices that can be housed within the room and according to the minimum safety distance at which the electrical devices require to be positioned, the provision of curved plates or partition walls is an obstacle to the observance of these distances.

On the other hand, metallic plates having a high rigidity may require tiring mechanical actions by the installer to be bent and inserted within the cabinet.

The object of the present invention is to provide a partition wall capable of overcoming the drawbacks as described above.

This object is achieved by the expandable shelf assembly such as defined and characterized in claim 1. Alternative embodiments of the partition wall are as defined in the dependent claims 2-7. An object of the present invention is also a cabinet such as defined in claim 8. Document EP 0 858 254 discloses a device according to the preamble of claim 1.

The invention will be better understood from the following detailed description of an embodiment thereof, which is given by way of non-limiting example with reference to the annexed figures, in which:
Fig. 1 shows a perspective view of a partition wall in accordance with an example of the invention;
Fig. 2 is a perspective view of a portion of a cabinet for electrical switchboards comprising the partition walls of Fig. 1, and
Fig. 3 is an enlargement of a detail of the cabinet from Fig. 2.

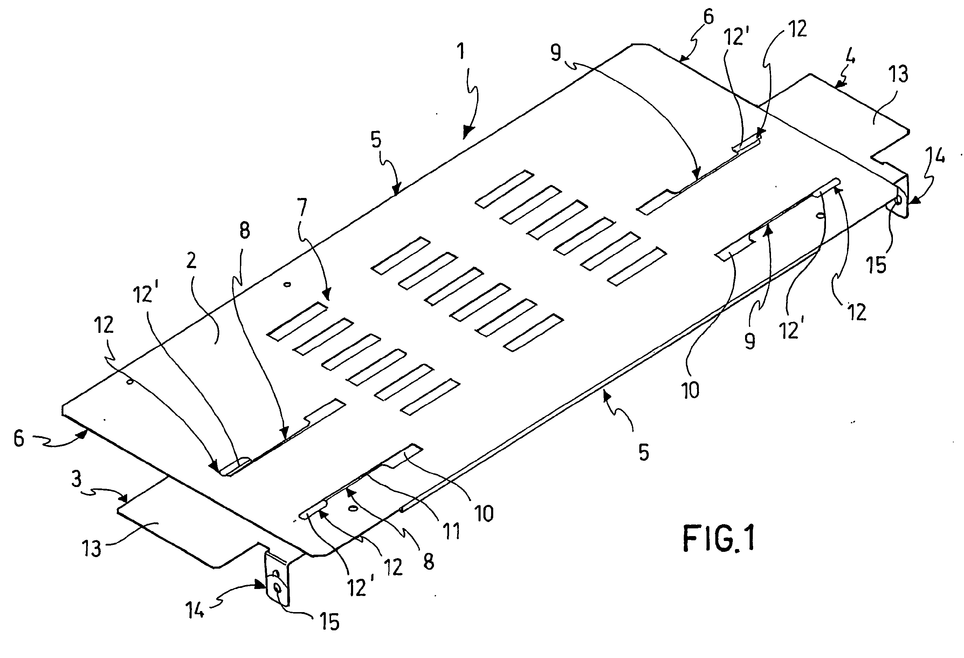

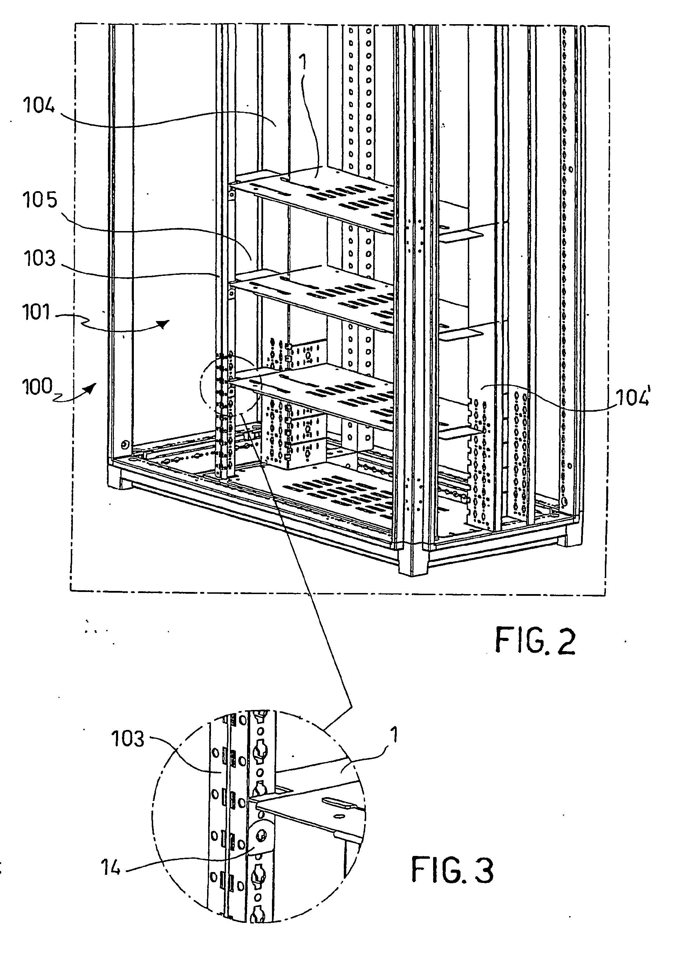

With reference to Fig. 1 and 2, a partition wall, generally designated with numeral 1, comprises a self 2 to which a first adjusting element 3, and preferably a second adjusting element 4, is mechanically coupled.

With reference to Fig. 2, the wall 1 can be inserted within a cabinet 100 having an outer bearing frame 101, and an inner frame supporting one or more of said walls including a first upright 103, a second upright 104, a third upright 104', and a fourth upright not seen in the figures.

The adjusting elements 3 and 4 can be coupled to respective portions of the plate 2 such as to be capable of assuming several operating positions and thus adapting the wall 1 to the cabinet 100. Particularly, each of the adjusting elements 3 and 4 can be slidingly coupled to the plate 2.

The plate 2, preferably, has a rectangular shape, having a first dimension 5 and a second dimension 6, the second dimension being lower than the first one. The plate 2 is, for example, made of metallic material.

The plate 2 is further provided with first openings 8 to be coupled with the first adjusting element 3 and second openings 9 to be coupled with the second adjusting element 4. The first 8 and second 9 openings are preferably defined parallel to the first dimension 5 of the plate. Each of the openings 8 and 9 has the shape of an elongated "L" and comprises, from the inside of the plate 2 to the outside, a hole 10 (for example, rectangular) having a widened shape and a slot or channel 11 being joined to the hole. The hole 10 and the slot 11 of the openings 8 and 9 are the insertion seat and the sliding seat for respective projecting elements 12, respectively, as one piece with the adjusting elements 3 and 4.

Referring back to the description of the adjusting elements, these are preferably metal sheets provided with the projecting elements 12. The projecting elements 12 vertically extend relative to the surface of the plate 2 and substantially have the shape of a reversed "L" and comprise a first tract of a width substantially equal to the width of the slot 11 and fastening means 12' such as, for example, a folded tongue joined to the first tract.

This fastening tongue 12' is suitable to pass through the hole 10 of one of the openings 8 and 9. When the projecting element 12 is slidingly engaged with the slot 11, the fastening tongue 12' rests on the upper surface of the plate 2 thereby restraining the movement of the adjusting element 3 and 4 parallel to the plate 2 and preventing that the adjusting element may be detached in the vertical direction relative to the main plane of the plate 2.

The adjusting elements 3 and 4 further comprise an extension 13 and a side tab 14, which is obtained, for example, by bending downwards a portion of the metal sheet placed beside the extension 13. The side tab 14 of the first adjusting element 3 is suitable to contact the first support upright 103 of the cabinet 100. The extension 13 is suitable to occupy a space 105 being defined by the two uprights 103 and 104, such as depicted in Fig. 2, which have a quadrangular plan and support the cabinet.

The side tab 14 is provided, for example, with a through hole 15 suitable to receive a fixing screw to engage a respective hole of the support upright of the cabinet 100 to definitely attach the partition wall to the cabinet.

The plate 2 has, in the middle of its surface, a plurality of openings 7. In the example illustrated in Fig. 1, the openings 7 have a rectangular shape and are substantially distributed in the middle of the plate 2 and allow the plate to be lighter.

During the step of assembling the cabinet, the installer couples the adjusting elements 3 and 4 to the plate 2 by passing each fastening tongue 12' through the respective hole 10 and subsequently causing each adjusting element to slide towards the outside by means of the projecting elements 12 engaging the respective slots 11. The adjusting elements 3 and 4 are, at this point, movable relative to the plate 2 along the first dimension 5, thereby making the length of the partition wall 1 adjustable.

Subsequently, the installer reduces this length of the partition wall 1 such that the wall can be housed within the cabinet without being obliged to bend or flex the wall. At this point, the two adjusting elements 3 and 4 are slidingly moved such as to adjust the length of the wall 1 to obtain the abutment of the side tabs 14 against the first support upright 103 and the fourth support upright of the cabinet.

As may be observed, the object of the invention is fully achieved since the partition wall 1 has an adjustable length such as to be easily introduced within a cabinet and be used for electrical switchboard cabinets having different lengths. In the assembly and installation steps, the wall does not require to be bent or flexed, and upon fixing the cabinet, the side tabs are in the ideal position for the fixing screws to be properly tightened.

There is advantageously also provided the filling of the space defined by the support uprights associated with the same side wall of the cabinet, which, in the case of the prior art conventional walls, were not covered.

Obviously, to the wall and cabinet according to the present invention, those skilled in the art, aiming at satisfying contingent and specific requirements, may carry out a number of modifications and variations, all being however contemplated within the scope of protection of the invention, such as defined in the annexed claims.

## Claims

1. An expandable shelf assembly (1) for an electrical cabinet (100) for electrical devices comprising:
- a shelf (2) halving a first dimension (5) to be inserted within the cabinet,
- means for attaching the shelf (2) to the cabinet, the attaching means comprise an adjusting element (3) to be coupled to the shelf (2) in different operating positions along the first dimension such that the expandable shelf assembly (1) can be adapted to corresponding dimension of the cabinet, the adjusting element (3) being provided with slide means for coupling to the shelf (2), **characterised by** the slide coupling means comprising projecting elements (12) being as one piece with said one adjusting element (3, 4) suitable to engage respective openings (8,9) defined on the shelf (2), whereby
the openings (8,9) comprise a first insertion seat (10) and a second sliding seat (11) for said projecting elements (12).

2. The expandable shelf assembly (1) according to claim 1, wherein the attaching means comprise a further adjusting element (4) to be coupled to the shelf (2) in different operating positions along the first dimension or along a second dimension of the shelf.

3. The expandable shelf assembly (1) according to claim 1, wherein the projecting elements (12) comprise a fastening means (12') suitable to allow the adjusting element to slide along the first dimension laying on a main plane of the shelf and avoiding that the adjusting element may be detached along a dimension orthogonal to the main plane.

4. The expandable shelf assembly (1) according to claim 1, wherein said adjusting element (3, 4) further comprises at least one side tab (14) suitable to contact a first support upright (103) of the cabinet (100).

5. The expandable shelf assembly (1) according to claim 4, wherein said at least one side tab (14) has a through hole (15) suitable to receive means for fixing said adjusting element (3,4) to the cabinet (100).

6. The expandable shelf assembly (1) according to claim 4, wherein said adjusting element (3, 4) further comprises an extension (13) suitable to occupy a space being defined by the first (103) and a second (104) support uprights of the cabinet (100).

7. The expandable shelf assembly (1) according to claim 1, wherein said shelf (2) and said at least one attachment element (3,4) are made of metallic material.

8. A cabinet for electric devices, comprising a first (103, 104) and a second (104') support framework, a shelf (2) having a first dimension (5) to be inserted within the cabinet, means for attaching the shelf (2) to the first and second support structures, **characterized in that** the attachment means are made according to at least one of the preceding claims.

## Patentansprüche

1. Erweiterbare Regalanordnung (1) für einen Schaltschrank (100) für elektrische Vorrichtungen, umfassend:
- ein eine erste Abmessung (5) aufweisendes Regal (2), welches innerhalb des Schranks einzubringen ist,
- Mittel zum Anbringen des Regals (2) an den Schrank, wobei die Anbringungsmittel ein Einstellelement (3) umfassen, welches an das Regal (2) in unterschiedlichen Betriebspositionen entlang der ersten Abmessung derart zu koppeln ist, dass die erweiterbare Regalanordnung (1) an eine entsprechende Abmessung des Schranks angepasst werden kann, wobei das Einstellelement (3) mit an das Regal (2) zu koppelnden Gleitmitteln bereitgestellt ist,
**dadurch gekennzeichnet, dass** die Gleitkopplungsmittel vorstehende Elemente (12) umfassen, welche einstückig mit dem einen Einstellelement (3, 4) sind und dazu geeignet sind, mit jeweiligen an dem Regal (2) definierten Öffnungen (8, 9) in Eingriff zu treten, wobei die Öffnungen (8, 9) einen ersten Einführsitz (10) und einen zweiten Gleitsitz (11) für die vorstehenden Elemente (12) umfassen.

2. Erweiterbare Regalanordnung (1) nach Anspruch 1,
wobei die Anbringungsmittel ein weiteres Einstellelement (4) umfassen, welches in unterschiedlichen Betriebspositionen entlang der ersten Abmessung oder entlang einer zweiten Abmessung des Regals an das Regal (2) zu koppeln ist.

3. Erweiterbare Regalanordnung (1) nach Anspruch 1,
wobei die vorstehenden Elemente (12) Befestigungsmittel (12') umfassen, welche geeignet sind, dem Einstellelement zu gestatten, in der ersten in einer Hauptebene des Regals liegenden Richtung zu gleiten, und zu verhindern, dass das Einstellelement in einer zu der Hauptebene orthogonalen Richtung abnehmbar ist.

4. Erweiterbare Regalanordnung (1) nach Anspruch 1,
wobei das Einstellelement (3, 4) ferner wenigstens eine Seitenlasche (14) umfasst, welche geeignet ist, mit einer ersten Tragestütze (103) des Schranks (100) in Kontakt zu stehen.

5. Erweiterbare Regalanordnung (1) nach Anspruch 4,
wobei die wenigstens eine Seitenlasche (14) ein Durchgangsloch (15) aufweist, welches geeignet ist, Mittel zum Befestigen des Einstellelements (3, 4) an den Schrank (100) aufzunehmen.

6. Erweiterbare Regalanordnung (1) nach Anspruch 4,
wobei das Einstellelement (3, 4) ferner eine Verlängerung (13) umfasst, welche geeignet ist, einen durch die erste (103) und eine zweite (104) Tragestütze des Schranks (100) definierten Raum zu besetzen.

7. Erweiterbare Regalanordnung (1) nach Anspruch 1,
wobei das Regal (2) und das wenigstens eine Anbringungselement (3, 4) aus einem metallischen Material hergestellt sind.

8. Schrank für elektrische Vorrichtungen,
umfassend einen ersten (103, 104) und einen zweiten (104') Tragerahmen, ein eine erste Abmessung (5) aufweisendes Regal (2), welches innerhalb des Schranks einzubringen ist, Mittel zum Anbringen des Regals (2) an die erste und die zweite Tragestruktur, **dadurch gekennzeichnet, dass** die Anbringungsmittel nach wenigstens einem der vorhergehenden Ansprüche hergestellt sind.

## Revendications

1. Ensemble d'étagère extensible (1) pour une armoire électrique (100) pour dispositifs électriques comprenant:
une étagère (2) ayant une première dimension (5) à insérer à l'intérieur de l'armoire,
des moyens pour fixer l'étagère (2) à l'armoire, les moyens de fixation comprennent un élément d'ajustement (3) à coupler à l'étagère (2) dans différentes positions opérationnelles le long de la première dimension de sorte que l'ensemble d'étagère extensible (1) peut être adapté à la dimension correspondante de l'armoire, l'élément d'ajustement (3) étant prévu avec des moyens coulissants pour le couplage à l'étagère (2), **caractérisé par** les moyens de couplage coulissants comprenant des éléments en saillie (12) qui sont d'un seul tenant avec ledit un élément d'ajustement (3, 4) approprié pour mettre en prise des ouvertures (8, 9) respectives définies sur l'étagère (2), moyennant quoi
les ouvertures (8, 9) comprennent un premier siège d'insertion (10) et un second siège coulissant (11) pour lesdits éléments en saillie (12).

2. Ensemble d'étagère extensible (1) selon la revendication 1, dans lequel les moyens de fixation comprennent un premier élément d'ajustement (4) à coupler à l'étagère (2) dans différentes positions opérationnelles le long de la première dimension ou le long d'une seconde dimension de l'étagère.

3. Ensemble d'étagère extensible (1) selon la revendication 1, dans lequel les éléments en saillie (12) comprennent des moyens de fixation (12') appropriés pour permettre à l'élément d'ajustement de coulisser le long de la première dimension se trouvant sur un plan principal de l'étagère et évitant que l'élément d'ajustement puisse être détaché le long d'une dimension orthogonale au plan principal.

4. Ensemble d'étagère extensible (1) selon la revendication 1, dans lequel ledit élément d'ajustement (3, 4) comprend en outre au moins une languette latérale (14) appropriée pour être en contact avec un premier montant de support (103) de l'armoire (100).

5. Ensemble d'étagère extensible (1) selon la revendication 4, dans lequel ladite au moins une languette latérale (14) a un trou de passage (15) approprié pour recevoir des moyens pour fixer ledit élément d'ajustement (3, 4) à l'armoire (100).

6. Ensemble d'étagère extensible (1) selon la revendication 4, dans lequel ledit élément d'ajustement (3, 4) comprend en outre une extension (13) appropriée pour occuper un espace qui est défini par le premier (103) et un second (104) montant de support de l'armoire (100).

7. Ensemble d'étagère extensible (1) selon la revendication 1, dans lequel ladite étagère (2) et ledit au moins un élément de fixation (3, 4) sont réalisés avec un matériau métallique.

8. Armoire pour dispositifs électriques, comprenant un premier (103, 104) et un second (104') cadre de support, une étagère (2) ayant une première dimension (5) à insérer à l'intérieur de l'armoire, des moyens pour fixer l'armoire (2) aux première et seconde structures de support, **caractérisée en ce que** les moyens de fixation sont réalisés selon au moins l'une des revendications précédentes.
